# EUROPEAN PATENT APPLICATION

(11) **EP 3 901 517 A1**
(43) Date of publication of application: **27.10.2021**
(21) Application number: 21170168.5
(22) Date of filing: 23.04.2021
(51) Int. Cl.: F21S 43/14, F21S 43/15, F21S 43/239, F21S 43/245, F21S 43/249, B60Q 3/64, B60Q 3/74, F21V 8/00, F21W 104/00

(54) **ILLUMINATION DEVICE AND HEADLIGHT FOR A VEHICLE COMPRISING THE ILLUMINATION DEVICE**

(30) Priority: 23.04.2020 ES 202030338
(71) Applicant: Seat, S.A., 08760 Martorell (ES)
(72) Inventor: ELVIRA ÁVILA, Carles, MARTORELL (ES); CORULL MASSANA, Ernest, MARTORELL (ES); MORÓN MORTE, Juan Carlos, MARTORELL (ES); PIQUÉ COSCONERA, Xavier, MARTORELL (ES); PAREDES DOMINGUEZ, Magnolia, MARTORELL (ES); DÍAZ MARTÍN, Adán, MARTORELL (ES)
(74) Representative: Ponti & Partners, S.L.P

(57) **Abstract**

The present invention firstly relates to an illumination device (1), for example for a front headlight (20) or a taillight (pilot light) of a vehicle, made up of different flat light guides (10) arranged superimposed on each other with etchings or optics that enable different patterns to be generated for each one of the light guides (10). The illumination device (1) of the present invention is capable of generating a surprising visual/optical effect, wherein the observer perceives different illuminated patterns or different illumination sequences of said patterns, as if they were generated by a single light guide.

It also relates, according to a second aspect, to a vehicle headlight (20) that includes the illumination device (1), with the same objectives as the aforementioned ones. Specifically, the reduced space occupied by the illumination device favours the integration thereof in a headlight of a vehicle.

## Description

The present invention is related, according to a first aspect, to an illumination device, for example for a front headlight (headlight) or a taillight (pilot light) of a vehicle, made up of different flat light guides arranged superimposed on each other with etchings or optics that enable different patterns to be generated for each one of the light guides. The illumination device of the present invention is capable of generating a surprising visual/optical effect, wherein the observer perceives different illuminated patterns or different illumination sequences of said patterns, as if they were generated by a single light guide.

It is also related, according to a second aspect, to a vehicle headlight that includes the illumination device, with the same objectives as the aforementioned ones. Specifically, the reduced space occupied by the illumination device favours the integration thereof in a headlight of a vehicle.

### Background of the invention

Illumination devices are known which comprise the features of the preamble of claim 1 of the present invention, that is to say which comprise at least two flat light guides that are arranged, at least partially, one superimposed on top of the other.

A light guide has the main function of transmitting the light beams generated by one or more light emitters or sources along a longitudinal direction, in the case of longitudinal light guides, or along and across a plane in the case of flat light guides.

In the case of flat light guides, the light beams enter through a lateral surface, are transmitted along the guide by the action of internal reflection on the internal walls thereof and are finally extracted through a main extraction surface.

The light beams escape from the inside of the light guide thanks to the provision of a plurality of escape elements or optical structures arranged at different points of the light guide and configured to direct the light beams that abut against said escape elements or optical structures to be extracted to the outside of the light guide, thereby generating the illumination sought in each case. In a conventional manner, known optical structures and/or other types of light extraction structures are preferably arranged on a rear face or surface of the light guide, this rear surface being opposite the main extraction surface. Said optical structures are distributed throughout the light guide. The function of said optical structures and/or other types of light extraction structures is to direct the light towards the anterior surface or light extraction surface of the light guide. These optical structures and/or other types of light extraction structures can be homogeneously or non-homogeneously distributed on the front surface of the light guide, depending on the design of the pattern or serigraph to be generated.

Thus, illumination devices are known which describe an arrangement of light guides in which a plurality (that is to say more than one) of light guides are provided arranged superimposed on each other, one on top of the other in a vertical axis and with an air space between two adjoining light guides. These flat light guides are configured to receive light from one or more light emitters only through one lateral face or surface of the light guide.

Known illumination devices describe an arrangement wherein the light emitters, such as the LED type, individually emit light to each one of the different light guides. In this configuration of light guides arranged superimposed on each other, there is the option that depending on the light emitters that are switched on, one or the other light guide will light up.

Specifically, there are concepts such as those described in patent documents DE102010006348 or JP2014082041, which disclose more than one light guide superimposed on each other, with etchings and/or optics on the rear face thereof thereby generating different patterns for each one of the light guides.

The main problem associated with these two patents is the package or space occupied by the illumination device. When used in front headlights or tail lights of a vehicle, said space is extremely small, so the volume occupied by the illumination device formed by the superimposed guides must necessarily be small (especially in the direction of light extraction).

Furthermore, it must also be taken into account that the headlights and the pilot lights of the vehicles are seen from the outside of the vehicle. Thus, an observer can be located in a frontal position with respect to said headlight, in a lateral position with respect to said headlight or in any of the intermediate positions. If the concept described in the two cited patents DE102010006348 or JP2014082041 is used, an observer external to the headlight would perceive the existence of the different light guides that make up the illumination device (for example, three light guides shown in the cross-sectional view of Figure 2 of JP2014082041), independent from each other. What is sought in the present invention is precisely to generate a visual effect wherein the external observer perceives a single light guide (when in reality there are 3 or 4 superimposed light guides) that generates different patterns and serigraphs, even in different colours.

It appears, therefore, necessary to offer an alternative to the State of the Art that covers the gaps found therein, providing an illumination device formed by a plurality of superimposed light guides, configured to, by way of example, be installed in an interior or exterior portion of a vehicle, and in particular to light up one or more surfaces (for example an interior surface of a headlight) by means of different patterns and serigraphs, even in different colours, and generating a visual effect wherein the external observer perceives a single light guide (when in fact the illumination device is comprised of two or more superimposed light guides).

### Description of the invention

The first object of the present invention is to provide a suitable illumination device to be installed inside or outside a vehicle, for example, integrated inside a tail light (pilot light) or a front headlight (headlight) and to light up one or more surfaces, generating a visual effect wherein it seems that the same light guide generates different signatures or lights up different areas, regardless of whether said areas are superimposed, and that solves the aforementioned drawbacks, exhibiting the advantages that are described below.

Preferably, the surface to be illuminated by means of this illumination system is a surface of the inside of an illumination device such as a vehicle headlight, although other interior parts of the vehicle can be perfectly illuminated by the system of the invention, such as decorative surfaces arranged on an instrument panel or on a door panel. Illuminating a surface of the inside of an illumination device is understood as illuminating a pattern, drawing or serigraph arranged inside said illumination device, directing the light to the outside of said illumination device, thus being able to be observed by an observer arranged opposite the same.

According to a first aspect, the present invention provides an illumination device, comprising, in a manner known per se:
- at least two flat light guides that are arranged superimposed, at least partially, one on top of the other in a direction "Z" of light extraction, wherein each of the light guides comprises:
   - a first main surface, which extends along a longitudinal direction "X" and a transverse direction "Y" with respect to the longitudinal direction "X", and wherein the first main surface is configured to extract light beams from the light guide,

   - a second main surface, opposite the first main surface, which also extends along the longitudinal "X" and transverse "Y" directions,
   - at least one lateral surface, arranged between the first main surface and the second main surface, wherein the at least one lateral surface is configured to receive the light beams generated by a plurality of light emitters and transmit the light beams through the inside of the light guide by the effect of internal reflection and along the longitudinal direction "X", and
   - a plurality of light extraction elements to direct the light to the first main surface, wherein the plurality of light extraction elements are arranged at least on the first main surface and/or on the second main surface; and
- a plurality of light emitters, wherein the light emitters are configured to emit light beams to a respective light guide of the at least two flat light guides, wherein the plurality of light emitters are arranged on at least one printed circuit board (PCB) and distributed in at least two light generation rows, wherein the plurality of light emitters of each light generation row are arranged aligned along the direction "Y", so that each light generation row emits light to a respective lateral surface of a different light guide.

Thus, there are a plurality of light emitters arranged on a printed circuit board (PCB), preferably, said printed circuit board (PCB) being flat and arranged in the Z-Y plane. The light emitters are arranged aligned with each other in at least two light generation rows. Thus, for a situation wherein there are only two light generation rows, there will be first light emitters arranged aligned in a first light generation row, and second light emitters arranged aligned in a second light generation row, wherein the first light generation row is parallel to the second light generation row.

Unlike the illumination devices preferably used in vehicles already known in the State of the Art, in the one proposed by the present invention, characteristically, the plurality of light emitters of the same light generation row are further distributed at positions interspersed with respect to the position of the plurality of light emitters arranged in an adjacent light generation row.

In the present invention, a plurality of light emitters are understood as two or more light emitters.

In the present invention, "interspersed positions" of the light emitters are understood as an arrangement wherein one or more of a group of light emitters of the same light generation line/row (that is, that they emit light in the same light guide) is/are arranged in an alternate position in the direction "Z" to the corresponding light emitter(s) of the adjacent light generation line/row (that is, they emit light to the next or adjoining light guide). By way of a simplified example, when there is a group of 2 consecutive light emitters in a first light generation row, that is, with practically no space between them, there is an absence of light emitters in the generation rows adjoining said first light generation row, in the direction "Z" of light extraction. Thus, the positions of one or a group of light emitters in the direction "Z" are interspersed between two adjoining rows. This interspersed arrangement preferably occurs along the entire extension of the Z-Y plane of the printed circuit board, or also referred to in the jargon by its acronym PCB.

The technical effect that this invention achieves by arranging the light emitters of two consecutive light generation rows in respective positions interspersed with each other on the printed circuit board is that, when, for example, the light emitters of the light generation row No. 1 are switched on, light is introduced into a first light guide, when the light emitters for example of the light generation row No. 2 are switched on, light is introduced into a second light guide, and so on. The optics or other light extraction structures provided in each one of the light guides make it possible to extract the light from them, thus generating a certain and specific serigraph for each one of the light guides.

This advantageous configuration interspersed between the locations of the light emitters of two adjacent light generation rows advantageously ensures that the light guides can be brought together as closely as possible, in the direction "Z", thereby reducing the thickness (that is to say, the length in the direction "Z") of the assembly of the illumination device and leaving only a minimum air space between them. This feature entails two great advantages: on the one hand, a much more compact and thinner illumination device is achieved in the direction "Z", which enables the volume of the illumination system to be significantly minimised; and as a second great advantage, it is possible to create the surprising effect of generating the visual effect wherein an external user positioned outside the illumination module, for example outside the vehicle, perceives the existence of a single light guide that generates different illumination signatures or patterns that are superimposed or in different areas (when in fact there are 3 or 4 superimposed light guides, depending on the superimposed signatures). All this thanks to the fact that said superimposed light guides can be separated by a minimum distance in the direction "Z" of approximately 1 mm, without the user perceiving said spaces between light guides, since the user, as the light guides are so close together, only perceives a single light guide.

Preferably, each one of the flat light guides is separated with respect to another light guide which is in an adjacent or adjoining position, so that a gap is provided between two adjacent light guides. This gap is a few millimetres long, so that an air chamber is formed between adjacent and parallel light guides. In this preferred configuration, the illumination system of the invention operates even more efficiently, since there is a minimum air space of a few millimetres that separates, in the direction "Z" of exit of the light beams to the outside, each one of the different light guides, there is no light transmission or light beam leakage from one light guide to the other (which is undesirable). In this way, the internal reflection of light inside each one of the light guides is guaranteed, minimising the leakage of light beams to the outside.

Also preferably, the at least two light generation rows are arranged in the same Z-Y plane, the light generation rows being parallel to each other and being superimposed between them according to a direction "Z" of light extraction.

Also preferably, the arrangement of a light emitter in a light generation row includes the absence of a light emitter in the at least one adjacent light generation row, according to a direction "Z" of light extraction.

Also preferably, the width of a light emitter in the direction "Z" of light extraction is greater than the thickness of the respective light guide in the direction "Z" of light extraction. It is noted that the width of the light emitters can vary between one light generation row and another light generation row, depending on the lighting requirements of the pattern or serigraph to be illuminated. Similarly, the thickness of one light guide can vary with respect to the thickness of another light guide.

Preferably, in the above embodiment wherein the width of a light emitter in the direction "Z" is greater than the thickness of the respective light guide in the direction "Z" of light extraction, the sum of the width of a first light emitter arranged in a first light generation row and the width of a second light emitter arranged in an adjacent second light generation row, according to the direction "Z" of light extraction, is greater than the sum of the thickness of the respective light guide of the first light emitter, the thickness of the respective light guide of the second light emitter and the gap between said two adjacent light guides, according to the direction "Z" of light extraction.

Thus, the interspersed arrangement of the light emitters of different light generation rows is required in the cases indicated above. It is noted that, as described above, there are not two light emitters consecutively arranged according to the direction "Z" of light extraction. What has been described above indicates that the sum of the width of a first emitter arranged in a first light generation row and the width of a hypothetical second light emitter arranged in a second light generation row, adjacent to the first light generation row, is greater than the sum of the thickness of the respective light guide of the first light emitter, the thickness of the respective light guide of the second light emitter and the gap between said two adjacent light guides, according to the direction "Z" of light extraction.

Also preferably, in the illumination device of the invention the width of a light emitter in the direction "Z" of light extraction is greater than the gap between two adjacent light guides in the direction "Z" of light extraction. As indicated above, the gap between two adjacent parallel light guides is minimal.

Also preferably, in the illumination device of the invention, the gap between two adjacent light guides, according to the direction "Z" of light extraction, is less than the thickness of the light guide, according to the direction "Z" of light extraction.

As can be seen, the aforementioned dimensions described in the preceding points make it possible to define and parameterise the spaces occupied by the different components of the illumination device, especially in the direction "Z" of light extraction, said dimensions or comparatives being those required to minimise the space occupied by the illumination device in the direction "Z" of extraction, thus achieving the objectives and technical advantages described above.

Preferably the light emitters are installed touching or very close to the lateral surface of each light guide, thereby avoiding light losses and improving the light efficiency of the illumination system. This means that the light guides are arranged almost touching the light emitters (or the PCB). The gap is minimal so that most of the light beams emitted in the shape of a cone by the light emitter are introduced into the corresponding light guide and there are no undue light leakages or losses towards nearby light guides. Alternatively, there may be collimators or other optical structures that help prevent the loss of light beams.

According to a possible embodiment of the illumination device of the invention, two or more light emitters of the same light generation row are arranged along the transverse direction "Y" separated by the same distance Sₒ between two adjacent light emitters.

According to another possible embodiment of the illumination device of the invention, two or more light emitters of the same light generation row are arranged along the longitudinal direction "Y" separated a non-uniform distance between two adjacent light emitters. This second embodiment of uneven separation can exist in combination with uniform separation. In other words, the arrangement of the light emitters in each row (that is, for each light guide) can be uniform throughout the entire direction "Y" or non-uniform, or a combination thereof. That is, it may be the case that there are rows wherein there is both uniform separation and uneven separation, or a combination of the two, and also rows wherein there is only uniform separation between light emitters, etc.

In the case of being uniform, we understand that there is an equal distance between each light emitter and the next light emitter along the direction "Y", but it could also be uniform by inserting a group of two light emitters followed by a space between the next groups of two light emitters in the direction "Y", i.e., a uniform pattern. And an example of a non-uniform arrangement is, for example, in the event that the light emitters are concentrated only in a specific area of the lateral surface of each light guide.

The number and distribution of the light emitters of each light guide depends on the serigraphs and the degree of intensity of the illumination of said serigraphs, even being able to exhibit areas or zones of said serigraph with a requirement of higher light intensity than other areas or zones of the same serigraph. What is clear is that regardless of said number of light emitters and the distribution of the light emitters of each light guide, it must be fulfilled that there is an alternation in terms of the positions of one or more light emitters between two adjoining rows, thus minimising the space occupied by the illumination device in the direction "Z" of light extraction.

Preferably, all the light emitters of the illumination device are installed on the same printed circuit board (PCB), which will be common for all the light emitters. Alternatively, there may be different printed circuit boards (PCBs). The alternate distribution of the illumination devices will be implemented for those illumination devices of different light generation rows arranged on the same printed circuit board (PCB).

Preferably, each light emitter emits radiation visible to the human eye, each light source being of a colour, which can be the same or different from the other light emitters arranged in other light generation rows. By way of example, a light emitter is configured to emit light beams in a 120° cone.

The light emitters of the same light generation row can be switched on progressively, generating filling or emptying effects for the external user. All light emitters in the same light generation row can also be switched on simultaneously. For each row they can also be switched on simultaneously or sequentially. In other words, when the light emitters in row No. 1 are switched on simultaneously or progressively, light is introduced into a first light guide and the optics or other light extraction structures provided in said first light guide enable the light to be extracted by generating a specific serigraph. The same occurs for the different light generation rows and thus the remaining light guides.

Light emitters of different colours can even be arranged in the same light generation row, for example white and red. When the white ones are switched on, the serigraph in white is illuminated and when the red ones are switched on, it is illuminated in red.

Each light emitter is controllable between a first off state and a second on state.

Each light emitter can include any known form of light source or emitter. Light-emitting diode (LED) is chosen as the preferred light emitter, although any other form of illumination configured for emitting light can be used, such as fluorescent illumination, organic LEDs (OLED), polymer LEDs (PLED), or solid-state lighting.

The printed circuit board (PCB) is operationally coupled with a controller which has a control circuit that includes a light emitter drive circuit for simultaneously or sequentially controlling the activation and deactivation of the different light emitters. The PCB can be any type of circuit board, including but not limited to any flexible PCB and/or rigid PCB. The controller can be arranged inside or outside the illumination system.

With regard to the light guides, according to a preferred embodiment of the present invention, at least three flat light guides are provided which are at least partially superimposed on each other in the direction "Z" of light extraction. In other words, it is not necessary for the superimposition between adjacent light guides to be total, but there may be areas of the light guides that are slightly offset or that have different dimensions and/or geometries between the light guides.

In the present invention, the light guides are of the flat type, which extend in two directions: a longitudinal direction "X" and a direction "Y" transverse to the longitudinal direction "X". The length in the "X" and "Y" directions of each light guide is that required according to the surface to be illuminated. The longitudinal direction "X" being understood in the present invention as the main direction in which the light guides extend and, consequently, the direction of transmission of the light beams; and the direction "Y" being understood as the secondary direction in which the light guides extend and wherein the light emitters are arranged. Alternatively, the light guides may exhibit a certain curvature, the degree of curvature being the same or substantially the same for each one of the different light guides. Any geometry of the light guides is valid as long as there is a superimposition between the light guides in the direction "Z" of light extraction and a minimum air gap between consecutive light guides.

Each light guide can be a substantially transparent or translucent guide suitable for transmitting light. Each light guide can be formed from a rigid material that is made up of a curable substrate such as a polymerisable composite, a transparent material mould (MIC), or mixtures thereof. Acrylates are also commonly used to form rigid light tubes, as is polymethyl methacrylate (PMMA), which is a known substitute for glass. A polycarbonate material can also be used in an injection moulding process to form the rigid light guide.

As indicated above, each light guide exhibits a plurality of light extraction structures, such as a plurality of optics and/or a plurality of surface etchings. The light extraction structures can be the same or different for each light guide.

By way of example, the plurality of optics may be distributed along the at least one of the first main surface or second main surface of the light guide. It is understood that, in order to fulfil the function of light extraction, the arrangement of a plurality of surface etchings can be equally valid, as well as a combination of surface etchings and optics, being made on the surface of the at least one of the first main surface or second main surface of the light guide. As indicated, both the plurality of optics and the plurality of surface etchings may be arranged on the first main surface of the light guide or alternatively on the second main surface of the light guide. The invention, in both cases, works correctly. It could also be the case that the plurality of optics and the plurality of surface etchings are arranged on both surfaces, i.e., on the first main surface and also on the second main surface. For example, the plurality of optics could be arranged on the first main surface and the plurality of surface etchings on the second main surface, both performing the function thereof.

According to an alternative embodiment, the light extraction optical structures can be arranged in the intermediate zone of the light guide, i.e., between the first main surface and the second main surface, being obtained by a laser light etching process. It should be noted that any type of optical structure that enables the light beams to be directed to the outside of the light guide in the direction "Z" of light extraction is valid to fulfil the objectives of the present invention.

In order to be able to ensure a minimum space between adjoining light guides, contact surfaces in the form of projections can be arranged. These projections can be ribs that protrude from the light guides. The projections extend above the main surface of the respective light guide, preferably the respective second main surface, in the direction "Z" of light extraction. Thus, the at least one projection is obtained from the same injection process of the respective light guide, so that no additional elements are required. The projection ensures that there is a constant air gap along the entire light extraction surface. That is, the projection ensures the existence of a change of medium, in this case, an air space "e" between two adjacent light guides, so that the light is transferred more efficiently through the inside of the respective light guide.

The second object of the present invention is to provide a headlight for a vehicle, which comprises the illumination device defined above and, furthermore, a controller coupled to the printed circuit board (PCB), wherein the controller comprises a control circuit that includes a drive circuit of the at least one light emitter to control the activation and deactivation of the different light emitters simultaneously or sequentially. The inside of a vehicle headlight exhibits an extremely small space, especially in the direction "Z" of light extraction. This justifies the great advantage of having the illumination device object of the present invention, which precisely exhibits a small size in the direction "Z" by interspersing the light emitters between adjacent rows, enabling light guides of a lesser thickness to be used and/or exhibiting a smaller gap between consecutive light guides.

For a better understanding of what has been explained, a set of drawings is attached wherein, schematically and only by way of non-limiting example, practical cases of various exemplary embodiments of the illumination device of the invention and of the headlight that integrate the illumination device of the invention are shown.

### Brief description of the figures

Figure 1 is a top view of a portion of the illumination device (1) of the invention, wherein each horizontal line of light emitters, in this case LEDs (11), emits light to a different light guide (10) (represented as a horizontal rectangle).
Figure 2a is a perspective view of a possible example of an illumination device that enables different illuminated patterns or serigraphs to be generated, specifically, made up of three flat light guides superimposed on each other; and Figures 2b represent respective images of each one of the flat light guides of Figure 2a, but in this case, there is no superimposition between them.
Figures 3a and 3b are respective schematic front elevation views of a first possible exemplary embodiment of the illumination device object of the invention made up of four superimposed light guides.
Figure 4 is a schematic front elevation view of a second possible exemplary embodiment of the illumination device object of the invention, made up of five superimposed light guides.
Figure 5 schematically represents a front perspective view of a headlight of a vehicle wherein an external observer observes inside the interior cavity of the illumination device a space to be illuminated (22) that is illuminated by the superimposed light guides of the present invention.
Figure 6 is a schematic perspective view of a possible embodiment of a conventional flat light guide (1).
Figure 7 is a schematic perspective view of a possible embodiment of the device of the invention (1) wherein 3 superimposed flat guides (10) are provided.

### Description of exemplary embodiments

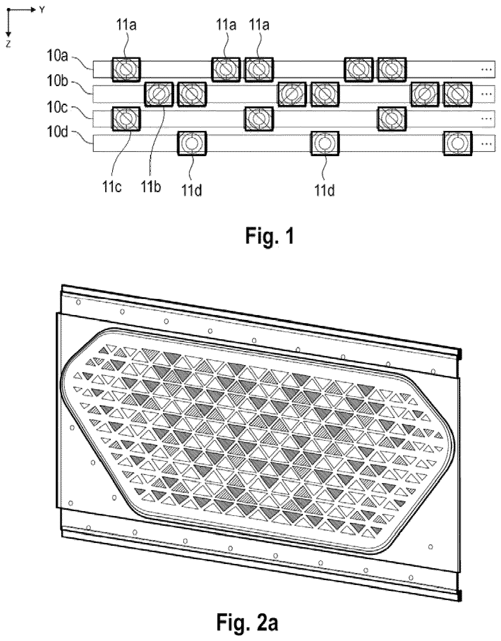

Next, some exemplary embodiments of the light guide to be installed in vehicles of the present invention are described with reference to Figures 1 to 7.

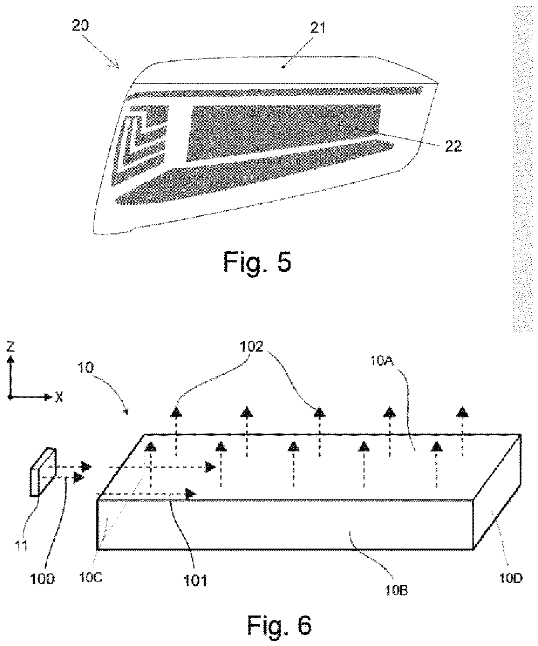

Figure 5 schematically represents a front perspective view of a headlight (20) of a vehicle, specifically, a left tail pilot light. An external observer observing said headlight (20) observes within the interior cavity of the illumination device, at least one space or surface (22) that is illuminated by the superimposed light guides of the present invention. The cover of the pilot light is represented by the reference (21). The superimposed light guides arranged inside the headlight (20) make it possible to light up a logo, a serigraph or any other geometrical shape. As said light guides are superimposed on each other, and by combining the switching on of the light emitters that illuminate a certain light guide with the switching off of the light emitters that illuminate other light guides, it is possible for the user to see different geometrical shapes generated in the same area or surface (22) of said headlight (20). The objective of the present invention is that, instead of visualising a plurality of light guides inside the headlight (20), it appears that said geometrical shapes are generated by the same light guide. This is achieved with the illumination device of the present invention, which occupies a very small space inside said headlight (20).

Referring to Figure 6, it represents, in general, a possible embodiment of a conventional flat light guide (10) known in the state of the art, which exhibits: a first main surface (10a), which extends in a longitudinal direction "X" and in a transverse direction "Y" with respect to the longitudinal direction "X", and is configured to extract light beams (102) from the light guide (10) towards a vertical direction "Z" of light extraction from the light guide (10), a second main surface (10b), opposite the first main surface (10a), and at least one lateral surface (10c), arranged between the first main surface (10a) and the second main surface (10b), wherein the at least one lateral surface (10c) is configured to receive the light beams (100) generated by at least one light emitter (11) and transmit them (101) through the inside of the light guide (10) by the effect of internal reflection. In this specific case, the light guide (10) also exhibits a second lateral surface (10d), opposite the lateral surface (10c), and wherein the second lateral surface (10d) is also arranged between the first main surface (10a ) and the second main surface (10b). Said figure 6 does not represent the optical elements that enable light extraction from the light guide (10). Said optical elements can be optics or surface etchings, as well as roughnesses arranged both on the first main surface (10a) and on the second main surface (10b) and that enable the light beams (101) that are transmitted through the inside of the light guide (10) to be deflected towards the light extraction surface, in this case the first main surface (10a), to be extracted from said light guide (10). Said optical elements can have any geometry and dimensions such that they are suitable to perform the previously stated function of internal refraction.

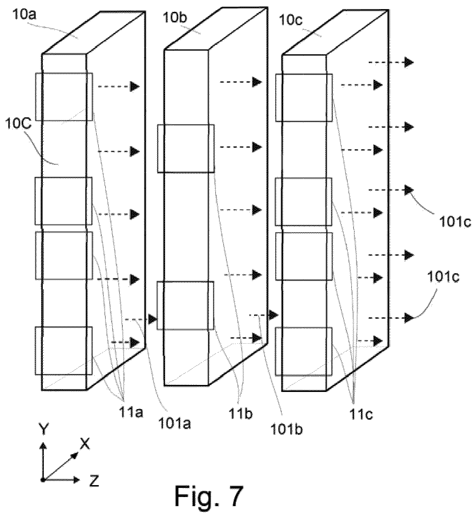

With reference to Figure 7, it represents a possible configuration of the illumination device of the invention made up of three flat light guides (10a, 10b, 10c) as previously explained in Figure 6. Said light guides (10a, 10b, 10c) are superimposed on each other, so that the first main surface (10a) of the left light guide (10a) is entirely opposite the second main surface (10b) of the intermediate light guide (10b), according to a direction "Z" of light extraction. Thus, the main surfaces (10a and 10b) of the three light guides (10a, 10b, 10c) are parallel and of equal dimensions.

Between two adjacent light guides (10a, 10b, 10c) (that is, between the guides (10a) and (10b) and between the guides (10b) and (10c)) there is a gap "e", occupied by air. This air gap "e" between light guides (10a, 10b, 10c) is necessary for the correct internal transmission of the light beams through the inside of the light guides (10a, 10b, 10c). In this way, there is a change of medium (material of the wall of the light guide - air - material of the wall of the light guide) that guarantees the correct internal transmission of the light beams. As can be seen, in the example of Figure 7, there is a total superimposition between the three light guides (10a, 10b, 10c) which exhibit the same shape and measurements. It must be noted that this total superimposition between the light guides (10a, 10b, 10c) is not necessary, and there may be a partial superimposition between them. In any case, to create the desired visual effect, it is necessary for the light beams extracted (101a) through the left light guide (10a) to pass through the intermediate light guide (10b) and the right light guide (10c), to be finally visualised by the external observer.

Continuing with said Figure 7, the squares on the lateral surface of each light guide (10a, 10b, 10c) represent the light emitters (11a, 11b, 11c). It can be seen how the light emitters (11a, 11b, 11c) are distributed aligned in the "Y" direction. Each one of the light emitter (11a, 11b, 11c) lines will be named as light generation rows. Thus, a first light generation row or row No. 1 is represented, comprising light emitters (11a) that introduce light only into the first light guide (10a) and there are four of them. Similarly, a second light generation row or row No. 2 is represented, comprising light emitters (11b) that introduce light only into the second light guide (10b) and there are two of them. Finally, a third light generation row or row No. 3 is represented, comprising light emitters (11c) that introduce light only into the third light guide (10c) and there are four of them. It is also observed, for example, how the emitter closest to the lower portion of row No. 1 and the emitter closest to the lower portion of the adjacent row No. 2 do not overlap, but instead are interspersed. In this figure the gap "e" between two adjacent light guides has been magnified, i.e., in reality this gap would be smaller in scale. The way it works would be as follows: the light emitters (11a, 11b, 11c) of the light guides (10a, 10b, 10c) are activated simultaneously or sequentially, so that the light beams enter the respective light guide (10) thereof and are transmitted along the direction "X" and direction "Y" through the inside of each light guide (10) and are extracted in the direction "Z". Light beams (101a) exiting from the first light guide (10a) are transmitted through the second light guide (10b) and the third light guide (10c). Moreover, the light beams (101b) exiting from the second light guide (10b) are transmitted through the third light guide (10c), and the beams (101c) exiting from the third light guide (10c) are already exiting to the outside of the illumination device.

Figure 1 shows the inventive concept of the present invention, wherein each horizontal line represents a row of light emitters, in this case LEDs (11), wherein each LED (11) emits light beams to the lateral face of a different light guide (10) (represented as an elongated rectangle). It can be observed, again, how the light emitters (11) of the same light generation row (for example the light emitters (11a) corresponding to row No. 1) are aligned with each other, specifically, in the direction "Y".

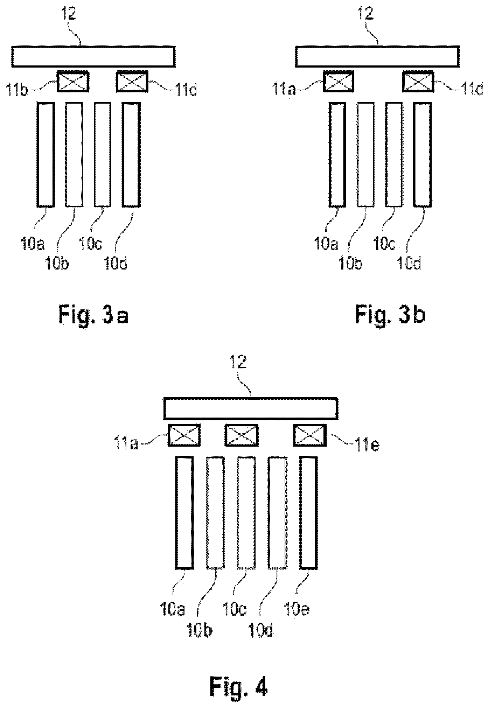

In the exemplary embodiment of Figure 1, 4 different superimposed light guides (10a, 10b, 10c, 10d) are represented. When only the LEDs (11a) of row 1 are switched on, light beams are introduced into the first light guide (10a), and so on for the remaining rows. The existing optics (not shown in Figure 1) in said first light guide (10a) enable the light beams to be extracted generating a specific serigraph for an external observer. Figure 1 clearly shows that the LEDs (11) of two consecutive rows (for example the LEDs (11a) of row No. 1 and the LEDs (11b) of row No. 2) are always interspersed with each other, such that it enables the package of the illumination device (1) to be minimised and at the same time the surprising effect that an external observer perceives as if there were only a single light guide is created, since the 4 light guides (10) can be separated, by way of example, by a 1 mm gap ("e") between two adjacent light guides (10). For example, the first LED (11a) starting from the left side of row No. 1 is in the same position as the first LED (11c) starting from the left side of row No. 3, but instead the first LED (11a) of row No. 1 is not in the same column as the first LED (11b) starting from the left side of row No. 2 (which is the row consecutive to row No. 1).

Thus, and in other words, in the presence of an LED (11) in a light generation row, for example in the presence of an LED (11b) in row No. 2, the absence of LEDs in the adjacent light generation rows is required, i.e., in row No. 1 and row No. 3, there cannot be any LED (11) in said column. In the present invention, row is understood as the direction "Y". Furthermore, in the present invention, column is understood as the direction "Z" of light extraction. As can be seen in Figure 1, the interspersed distribution of the LEDs (11) can be either completely alternate (as in a chessboard) or exhibiting other types of distributions. For example, there are two consecutive LEDs (11b) in row No. 2, i.e., practically together in the direction "Y". Consequently, to respect the distribution in interspersed positions of the present invention, in row No. 1 and row No. 3 there cannot be any light emitter (11 a or 11c, respectively) in the same column as said first two LEDs together (11b) of row No. 2.

It is also observed in this embodiment of Figure 1 how the length of all the LEDs (11a, 11b, 11c, 11d) in the direction "Z" is slightly greater than the thickness in the direction "Z" of the light guides (10a, 10b, 10c, 10d). In this case, the four light guides (10a, 10b, 10c, 10d) exhibit the same thickness. It is also observed in the same row of LEDs, that there are LEDs of different colours. For example, in row No. 2 there are groups of two LEDs, wherein the first LED of that group is yellow, while the second LED is red, and this group is repeated along the light guide (10). In the case of row No. 2, when all the yellow LEDs are switched on, the yellow serigraph is illuminated and when all the red LEDs are switched on, the same serigraph is illuminated in red. In this Figure 1 the colours have been replaced by striping type. The illumination device (1) can be programmed so that the LEDs (11) of the same row switch on progressively, that is, leaving a period of time between each switching on, which generates a surprising filling or emptying effect for an observer external to the illumination device (1).

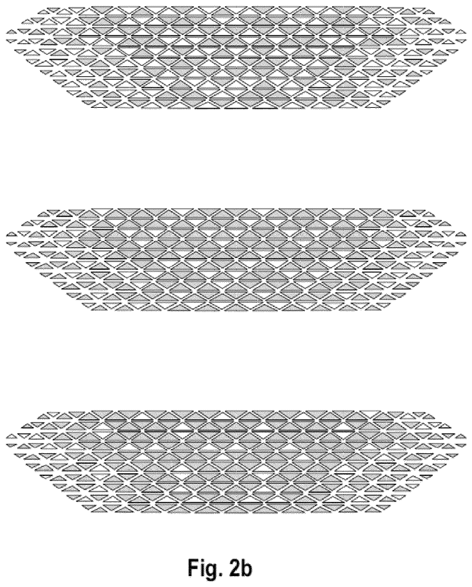

In particular reference to Figure 2a, a serigraph or geometry illuminated by the illumination device of the present invention is illustrated therein. Specifically, a plurality of triangular-shaped elements arranged in rows and columns and exhibiting different colours (specifically three: white, red and blue) are observed thanks to the existence of the illumination device of the invention formed by a superimposition of light guides. The triangular geometries of the same colour are generated by the same light guide (10) and the corresponding associated light emitters (11) thereof. Again, in this Figure 2 the red and blue colours have been replaced by striping type and the white colour has been represented with no stripes. In the example shown, all the light emitters (11) have been switched on simultaneously, so that the three patterns have been switched on. In this case, an external observer would observe patterns of different colours as if they were generated by the same and only light guide (10).

Figures 2b show the same triangular-shaped patterns arranged in rows and columns of Figure 2a, but instead of activating all the light emitters (11) simultaneously, they are independently switched on. Thus, in the upper Figure 2a, only the light emitters (11) that introduce light into the first light guide (10) are switched on, enabling the triangular geometries of grey colour to be observed illuminated. In the intermediate figure, only the light emitters (11) that introduce light into the second light guide (10) are switched on, enabling the triangular geometries of blue colour to be observed illuminated. In the figure below, only the light emitters (11) that introduce light into the third light guide (10) are switched on, enabling the triangular geometries of red colour to be observed illuminated. In this case, the observer would observe different illuminated patterns sequentially as if they were generated by the same and only light guide (10).

In particular reference to Figures 3a and 3b, a first exemplary embodiment of the illumination device object of the invention is illustrated therein made up of four superimposed light guides (10a, 10b, 10c, 10d). And the following Figure 4 shows a second exemplary embodiment of the illumination device made up of five superimposed light guides (10a, 10b, 10c, 10d, 10e). These three figures (Figures 3a, 3b and 4) show how the integrated circuit board (PCB) (12) is common to all the light guides (10a, 10b, 10c, 10d, 10e). Both in Figures 3a, 3b and 4, which correspond to schematic cross sections of the illumination device according to the X-Z plane, it is observed how the light emitters (11) are arranged interspersed on the integrated circuit board (PCB). Thus, in the presence of a light emitter (11) that introduces light into a certain light guide, there is an absence of light emitters in the adjacent light guides (10). Therefore, in the direction "Z" there are no two consecutive light emitters (11), always requiring a free space in order to be able to minimise the space occupied by the illumination device. In the hypothetical situation wherein, there were two consecutive light emitters (11) in said direction "Z", the width thereof would be greater than the length occupied by the thickness of the corresponding light guides (10) thereof and the gap between them (said length being calculated in the direction "Z" of light extraction). Consequently, the thickness of the set should inevitably increase, leading to occupying a greater total volume and preventing the creation of the surprising visual effect in which all the illuminated patterns or serigraphs seem to be generated from the same light guide (10).

Despite having referred to a specific embodiment of the invention, it is evident for a person skilled in the art that the illumination system suitable to be installed in a vehicle and the headlight incorporating said illumination device described above are susceptible to a number of variations and modifications, and that all the mentioned details can be replaced with other technically equivalent ones without departing from the scope of protection defined by the attached claims.

## Claims

1. An illumination device (1), comprising:
• at least two flat light guides (10) that are arranged superimposed, at least partially, one on top of the other in a direction "Z" of light extraction, wherein each of the light guides (10) comprises:
• a first main surface (10a), which extends along a longitudinal direction "X" and a transverse direction "Y" with respect to the longitudinal direction "X", and wherein the first main surface (10a) is configured to extract light beams from the light guide (10),
• a second main surface (10b), opposite the first main surface (10a), which also extends along the longitudinal "X" and transverse "Y" directions,
• at least one lateral surface (10c), arranged between the first main surface (10a) and the second main surface (10b), wherein the at least one lateral surface (10c) is configured to receive the light beams generated by a plurality of light emitters (11) and transmit the light beams through the inside of the light guide (10) by the effect of internal reflection and along the longitudinal direction "X", and
• a plurality of light extraction elements to direct the light to the first main surface (10a), wherein the plurality of light extraction elements are arranged at least on the first main surface (10a) and/or on the second main surface (10b); and
• a plurality of light emitters (11), wherein the light emitters (11) are configured to emit light beams to a respective light guide (10) of the at least two flat light guides (10), wherein the plurality of light emitters (11) are arranged on at least one printed circuit board and distributed in at least two light generation rows, wherein the plurality of light emitters (11) of each light generation row are arranged aligned along the direction "Y", so that each light generation row emits light to a respective lateral surface (10c) of a different light guide (10);
**characterised in that**, in addition:
the plurality of light emitters (11) of the same light generation row are distributed in interspersed positions with respect to the position of the plurality of light emitters (11) arranged in an adjacent light generation row.

2. The illumination device (1), according to claim 1, wherein the at least two light generation rows are arranged in the same Z-Y plane.

3. The illumination device (1), according to claim 1 or 2, wherein the arrangement of a light emitter (11) in a light generation row includes the absence of a light emitter (11) in the at least one adjacent light generation row, according to a direction "Z" of light extraction.

4. The illumination device (1), according to any one of the preceding claims, wherein the width of a light emitter (11), in the direction "Z" of light extraction, is greater than the thickness of the respective light guide (10), according to the direction "Z" of light extraction.

5. The illumination device (1), according to claim 4, wherein the sum of the width of a first light emitter (11) arranged in a first light generation row and the width of a second light emitter (11) arranged in an adjacent second light generation row, according to the direction "Z" of light extraction, is greater than the sum of the thickness of the respective light guide (10) of the first light emitter (11), the thickness of the respective light guide (10) of the second light emitter (11) and the gap between said two adjacent light guides (10), according to the direction "Z" of light extraction.

6. The illumination device (1), according to any one of the preceding claims, wherein the width of a light emitter (11), in the direction "Z" of light extraction, is greater than the gap between two adjacent light guides (10), according to the direction "Z" of light extraction.

7. The illumination device (1), according to any one of the preceding claims, wherein the gap between two adjacent light guides (10), according to the direction "Z" of light extraction, is smaller than the thickness of the light guide (10), according to the direction "Z" of light extraction.

8. The illumination device (1), according to any one of the preceding claims, wherein two or more light emitters (11) of the same light generation row are arranged along the transverse direction "Y" separated the same distance Sₒᵣ between two adjacent light emitters (11).

9. The illumination device (1), according to any one of the preceding claims, wherein two or more light emitters (11) of the same light generation row are arranged along the longitudinal direction "Y" separated a non-uniform distance between two adjacent light emitters.

10. The illumination device (1), according to any one of the preceding claims, wherein each light emitter (11) emits a radiation visible to the human eye axis, each light source being of a colour, which can be the same or different from the other light emitters (11) arranged in other light generation rows.

11. The illumination device (1), according to any one of the preceding claims, wherein the light emitters are installed on the same printed circuit board (PCB).

12. The illumination device (1), according to claim 1, comprising at least three flat light guides (10) at least partially superimposed.

13. The illumination device (1), according to claim 1, wherein the light extraction structures can be the same or different for each light guide (10).

14. A headlight (20) for a vehicle, comprising the illumination device (10) according to any one of the preceding claims and, furthermore, a controller coupled to the printed circuit board (PCB), wherein the controller comprises a control circuit which includes an actuation circuit of the at least one light emitter (11) to control the activation and deactivation of the different light emitters simultaneously or sequentially.
